# EUROPEAN PATENT APPLICATION

(11) **EP 4 443 731 A1**
(43) Date of publication of application: **09.10.2024**
(21) Application number: 21966223.6
(22) Date of filing: 20.12.2021
(51) Int. Cl.: H02M 7/02

(54) **TON TIMING CIRCUIT AND METHOD CAPABLE OF REDUCING ELECTROMAGNETIC INTERFERENCE OF SWITCHING POWER SUPPLY, AND SWITCHING POWER SUPPLY**

(30) Priority: 02.12.2021 CN 202111476945
(71) Applicant: Shaanxi Reactor Microelectronics Co., Ltd., Xi'an, Shaanxi 710075 (CN)
(72) Inventor: HE, Shibao, Xi'an, Shaanxi 710075 (CN); XIA, Qin, Xi'an, Shaanxi 710075 (CN)
(74) Representative: Zaboliene, Reda
(86) International application number: PCT/CN2021/139493
(87) International publication number: WO 2023/097799

(57) **Abstract**

The present invention provides a Ton timing circuit, a method and a switching power supply capable of reducing electromagnetic interference of the switching power supply, of which the circuit is a simple and easy-to-implement EMI reduction circuit of the switching power supply that can be integrated in a chip. This circuit adds a variable current source module and a random signal generation module on the basis of the original circuit, the random signal generation module generates N random square waves, which are used for the variable current source module and the constant current source I1 to generate N+1 variable currents, produce different frequencies, eliminate the resonant spikes at the switching frequency, and thus reduce electromagnetic interference caused by switching.

## Description

### Technical field

The present invention relates to a switching power supply circuit, in particular to a Ton timing circuit, a method and a switching power supply capable of reducing electromagnetic interference of the switching power supply.

### Background Art

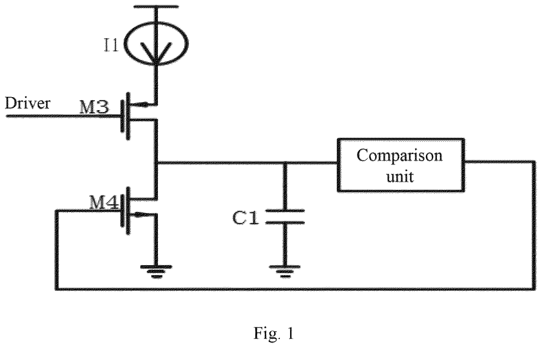

The switching power supply converts the external AC power into a stable DC power to supply the load. When the switching power supply is used in the charger of TV, radio or set-top box, it generally needs to be EMI (electromagnetic interference) certified. Fig. 1 shows the existing COT (Constant-On-Time) controlled buck converter circuit. Although COT control has better transient response and load regulation, the EMI of the circuit still has too large harmonic component at the switching frequency and can't be used under strict EMI requirements.

### Summary of the Invention

In order to reduce the electromagnetic interference of the switching power supply, the present invention provides a Ton timing circuit, a method and a switching power supply capable of reducing electromagnetic interference of the switching power supply, of which the circuit is a simple and easy-to-implement EMI reduction circuit of the switching power supply that can be integrated in a chip.

In order to achieve the above objectives, the present invention adopts the following technical solutions:
A Ton timing circuit capable of reducing electromagnetic interference of a switching power supply, comprising a constant current source I1, a charging tube M3, a discharging tube M4, a capacitor C1 and a comparison unit; said charging tube M3 includes a source connected to the output terminal of the constant current source I1, a drain connected to one end of the capacitor C1, and a gate connected to the switching signal Driver; the input end of said comparison unit is connected to one end of the capacitor C1; the other end of said capacitor C1 is grounded; said discharging tube M4 includes a drain connected to one end of the capacitor C1, a source connected to the ground, and a gate connected to the output of the comparison unit;

It is specially characterized in that it further comprises a variable current source module and a random signal generation module; said variable current source module comprises N channels of variable current source units, where N is an integer greater than 1; said variable current source unit comprises a switch tube and a current source I2, of which the sum of the N channels of current source I2 is less than the current of the constant current source I1; the output terminal of said current source I2 is connected to the source of the switch tube, and the drain of said switch tube is connected to one end of the capacitor C1; said random signal generation module comprises a random square wave generator, a shift register with N output terminals, and NAND gates, the output terminal of said random square wave generator is connected to the input terminal of the shift register and the N output terminals of the shift register are respectively connected to one input terminal of the N AND gates; the other input terminals of the N AND gates are respectively connected to the switching signal Driver, and the output terminals of the N AND gates are respectively connected to the gates of the N switch tubes in a one-to-one correspondence, used to control the respective conduction of N switch tubes.

Further, the sum of the currents of the N channels of current sources I2 is 10%-20% of the constant current source I1.

Further, the charging tube M3 is a PMOS type switch tube, and the discharging tube M4 is an NMOS type switch tube.

The present invention also provides a Ton timing method that can reduce electromagnetic interference of the switching power supply, comprising the following steps:
Step 1: One random square wave generated by the random square wave generator is used to generate N random square waves through the shift register, and the frequency of the random square wave is greater than the switching frequency of the power supply, and N is an integer greater than 1;
Step 2: Perform AND operation on the generated N channels of random square waves with the switching signal Driver respectively;
Step 3: The N calculation results respectively control the turn-on or turn-off of the N variable current source units; said N variable current source units have equal output currents, and the sum of the currents of the N current sources I2 is less than the current of constant current source I1;
Step 4: All of the N channels of variable current source units that are turned on and the constant current source I1 that is turned on under the control of the switching signal Driver jointly charge the capacitor C1;
Step 5: When the potential of the capacitor C1 reaches the comparison threshold in the comparison unit, the comparison unit generates a narrow pulse signal Ton_dis, which controls the discharging tube M4 to discharge to the capacitor C1.

In addition, the present invention also offers A Ton timing circuit capable of reducing electromagnetic interference of a switching power supply, comprising a constant current source I1, a charging tube M3, a discharging tube M4, a capacitor C1 and a comparison unit; said charging tube M3 includes a source connected to the output terminal of the constant current source I1, a drain connected to one end of the capacitor C1, and a gate connected to the switching signal Driver; the input end of said comparison unit is connected to one end of the capacitor C1; the other end of said capacitor C1 is grounded; said discharging tube M4 includes a drain connected to one end of the capacitor C1, a source connected to the ground, and a gate connected to the output of the comparison unit;

It is specially characterized in that it further comprises a variable current source module and a random signal generation module; said variable current source module comprises a variable current source unit; said variable current source unit comprises a switch tube and a current source I2; the current of said current source I2 is less than the current of the constant current source I1; the output terminal of said current source I2 is connected to the source of the switch tube, and the drain of said switch tube is connected to one end of the capacitor C1; said random signal generation module comprises a random square wave generator and an AND gate, said random square wave generator is connected to one input end of the AND gate, the other input end of the AND gate is connected to the switching signal Driver, and the output end of the AND gate is connected to the gate of the switch tube, used to control the conduction of the switch tube.

Further, the current of said current source I2 is 10%-20% of the constant current source I1.

Further, said charging tube M3 is a PMOS type switch tube and said discharging tube M4 is an NMOS type switch tube.

Moreover, the present invention also offers a Ton timing method capable of reducing the electromagnetic interference of the switching power supply, comprising the following steps:
Step 1: The random square wave generator generates a random square wave;
Step 2: Perform AND operation on the generated square wave and the switching signal Driver;
Step 3: The operation result controls the turn-on or turn-off of the variable current source module; the current of said current source I2 is less than the current of the constant current source I1;
Step 4: When the variable current source module is turned off, the constant current source I1 charges the capacitor C1; when the variable current source module is turned on, the variable current source module and the constant current source I1 jointly charge the capacitor C1;
Step 5: When the potential of the capacitor C1 reaches the comparison threshold in the comparison unit, the comparison unit generates a narrow pulse signal Ton_dis, which controls the discharging tube M4 to discharge to the capacitor C1.

In addition, the present invention also offers a low electromagnetic interference switching power supply based on COT control, comprising a switch module, an LC module, a sampling module, a feedback module, and a Ton timing module connected in sequence; said Ton timing module adopts the Ton timing circuit capable of reducing the electromagnetic interference of the switching power supply according to any one of claims 1 to 3, or said Ton timing module adopts the Ton timing circuit capable of reducing the electromagnetic interference of the switching power supply according to any one of claims 5 to 7; said feedback module is used to generate the turn-on edge of the switching signal Driver: fb_comp; said Ton timing module is used to generate the closing edge of the switching signal Driver: Ton_dis; said feedback module and Ton timing module work together to generate a Driver signal.

Compared with the prior art, the present invention has the following beneficial effects:
1. The present invention adds a variable current source module and a random signal generation module on the basis of the original circuit, the random signal generation module generates N random square waves, which are used for the variable current source module and the constant current source I1 to generate N+1 variable currents, produce different frequencies, eliminate the resonant spikes at the switching frequency, and thus reduce electromagnetic interference caused by switching.
2. The circuit of the present invention is a simple and easy-to-implement circuit that can be integrated in a chip to reduce the EMI of a switching power supply. The circuit does not need to use the traditional method of peripheral passive devices, and reduces the EMI of the switching power supply.

### Description of the Drawings

Figure 1 is a schematic diagram of a traditional Ton timing circuit;
Figure 2 is a schematic diagram of a Ton timing circuit capable of reducing electromagnetic interference of a switching power supply in the second embodiment of the present invention;
Figure 3 is a schematic diagram of a low electromagnetic interference switching power supply based on COT control in the third embodiment of the present invention;
Figure 4 is a schematic diagram of the output voltage EMI of the COT with the EMI reduction function according to the present invention and the traditional COT;
Figure 5 is a schematic diagram of load switching waveforms of COT control with EMI reduction function according to the present invention;
Figure 6 is a schematic diagram of the timing effect of the Ton timing circuit with EMI reduction function according to the present invention.

### Mode of Carrying out the Invention

The present invention will be described in detail below with reference to the drawings and specific embodiments. Those skilled in the art should understand that these embodiments are only used to explain the technical principles of the present invention, and are not intended to limit the protection scope of the present invention.

The present invention provides a simple and easy-to-implement circuit for reducing the EMI of a switching power supply that can be integrated in a chip, and the circuit can reduce the EMI of the switching power supply without using the traditional method of peripheral passive devices. The difference between the present invention and the traditional Ton timing circuit is that a variable current source module and a random signal generation module are added on the basis of the original circuit, the random signal generation module generates N random square waves for the variable current source module and the constant current source I1 to generate N+1 variable currents, generate different frequencies, eliminate the resonant spikes at the switching frequency, thus reduce electromagnetic interference caused by switching.

The Ton timing circuit capable of reducing the electromagnetic interference of the switching power supply according to the present invention comprises a constant current source I1, a charging tube M3, a discharging tube M4, a capacitor C1, a comparison unit, a variable current source module and a random signal generation module; the charging tube M3 includes a source connected to the output end of the constant current source I1, a drain connected to one end of the capacitor C1, and a gate connected to the switching signal Driver; the input end of the comparison unit is connected to one end of the capacitor C1; the other end of the capacitor C1 is grounded; the discharging tube M4 includes a drain connected to one end of the capacitor C1, a source connected to the ground, and a gate connected to the output of the comparison unit; the variable current source module comprises N channels of variable current source units, where N is an integer greater than or equal to 1; the variable current source unit comprises a switch tube and a current source I2, the sum of the currents of the N channels of current source I2 is less than the current of the constant current source I1; the output terminal of the current source I2 is connected to the source of the switch tube, and the drain of the switch tube is connected to one end of the capacitor C1; the random signal generation module comprises a random square wave generator, a shift register and N AND gates; when the current source I2 is one, there is no need to set shift register, and the random square wave generator is directly connected to an input terminal of the AND gate; when there are multiple current sources I2, the random square wave generator is connected to one input end of the N AND gates through N shift registers; the other input end of the N AND gates is connected to the switching signal Driver, and the output ends of the N AND gates are respectively connected to the gates of the N switch tubes in a one-to-one correspondence, used to control the respective conduction of the N switch tubes. The current source I2 has N channels, and N+1 kinds of variable currents can be generated through the on-off combinations of the N switch tubes.

The sum of the currents of the N channels of variable current sources of the present invention is 10%-20% of the constant current source I1; it is known from the simulation results that this ratio has the best effect of reducing EMI; moreover, the charging tube M3 can be a PMOS type switch tube, and the discharging tube M4 can be a NMOS type switch tube.

The working principle of the circuit: the charging tube M3 inputs the Driver signal; when the charging tube M3 is turned on, the constant current source I1 and the variable current source module charge the capacitor C1, and the constant current source I1 charges the same current each time, the charging current of variable current source module is variable and changes randomly like a random signal; when the potential on the capacitor C1 reaches the comparison threshold in the comparison unit, the comparison unit generates a narrow pulse signal Ton_dis, controls the discharging tube M4 to discharge to the capacitor C1 by Ton_dis, and performs Ton timing when the charging tube M3 is turned on in the next cycle, so the Ton of each cycle will be different, and applied in the BUCK circuit controlled by COT to generate different frequencies; observed on the frequency spectrum, the resonant spikes at the switching frequency can be eliminated, thereby reducing the EMI generated by switching.

### Embodiment 1

The Ton timing circuit capable of reducing the electromagnetic interference of the switching power supply provided in this embodiment comprises a constant current source I1, a charging tube M3, a discharging tube M4, a capacitor C1, a comparison unit, a variable current source module, and a random signal generation module; the source of charging tube M3 is connected to the output terminal of the constant current source I1, the drain is connected to one end of the capacitor C1, and the gate is connected to the switching signal Driver; the input terminal of the comparison unit is connected to one end of the capacitor C1; the other end of the capacitor C1 is grounded; the drain of the discharging tube M4 is connected to one end of the capacitor C1, the source is grounded, and the gate is connected to the output of the comparison unit; said variable current source module comprises a variable current source unit; the variable current source unit comprises a switch tube and a current source I2; the current of the current source I2 is less than the current of the constant current source I1. The output terminal of the current source I2 is connected to the source of the switch tube, and the drain of the switch tube is connected to one end of the capacitor C1; the random signal generation module comprises a random square wave generator and an AND gate, the random square wave generator is connected to the input terminal of the AND gate, the other input terminal of the AND gate is connected to the switching signal Driver, and the output terminal of the AND gate is connected to the gate of the switch tube, used to control the conduction of switch tube.

The variable current source unit in this embodiment is one channel. If one channel current is I2, there are 0, 1 *12, and 2 variable currents. In this embodiment, the current of the current source I2 is 10%-20% of the constant current source I1, the charging tube M3 may specifically be a PMOS type switch tube, and the discharging tube M4 may specifically be an NMOS type switch tube.

In addition, this embodiment also offers a Ton timing method that can reduce the electromagnetic interference of the switching power supply, comprising the following steps:
Step 1: The random square wave generator generates a random square wave;
Step 2: Perform AND operation on the generated square wave and the switching signal Driver;
Step 3: The operation result controls the turn-on or turn-off of the variable current source module; the current of said current source I2 is less than the current of the constant current source I1;
Step 4: When the variable current source module is turned off, the constant current source I1 charges the capacitor C1; when the variable current source module is turned on, the variable current source module and the constant current source I1 jointly charge the capacitor C1;
Step 5: When the potential of the capacitor C1 reaches the comparison threshold in the comparison unit, the comparison unit generates a narrow pulse signal Ton_dis, which controls the discharging tube M4 to discharge to the capacitor C1.

### Embodiment 2

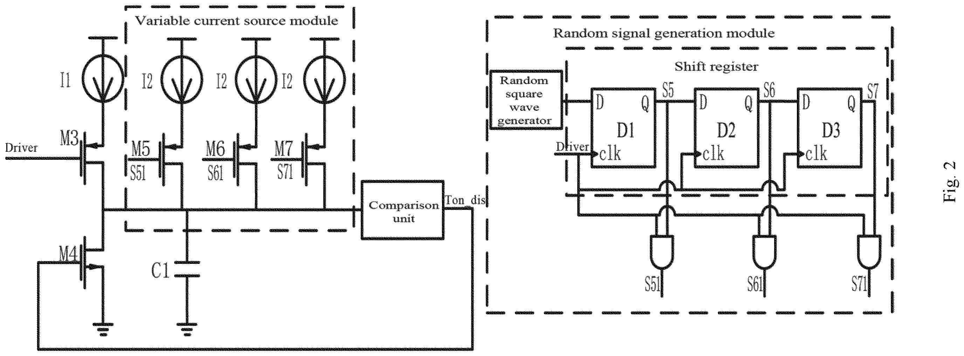

As shown in Figure 2, the Ton timing circuit capable of reducing the electromagnetic interference of the switching power supply provided by this embodiment comprises a constant current source I1, a charging tube M3, a discharging tube M4, a capacitor C1, a comparison unit, a variable current source module, and a random signal generation module; the source of the charging tube M3 is connected to the output terminal of the constant current source I1, the drain is connected to one end of the capacitor C1, and the gate is connected to the switching signal Driver; the input terminal of the comparison unit is connected to one end of the capacitor C 1; the other end of the capacitor C1 is grounded; the drain of the discharging tube M4 is connected to one end of the capacitor C1, the source is grounded, and the gate is connected to the output end of the comparison unit.

The variable current source module in this embodiment comprises three variable current source units, and each variable current source unit comprises a switch tube and a current source I2; the sum of the currents of the three current sources I2 is less than the current of the constant current source I1; the output terminal of the current source I2 is connected to the source of the switch tube, and the drain of the switch tube is connected to one end of the capacitor C1; the random signal generation module comprises a random square wave generator, a shift register with three output terminals and three AND gates, the output terminal of said random square wave generator is connected to the input terminal of the shift register, and the three output terminals of the shift register are respectively connected to one input terminal of the three AND gates; the other input ends of the three AND gates are respectively connected to the switching signal Driver, and the output ends of the three AND gates are respectively connected to the gates of the three switch tubes in one-to-one correspondence, used to control the respective conduction of the N switch tubes.

Principle of random signal generation module: A random square wave (frequency of the random square wave > switching frequency of the power supply) is generated through a random square wave generator, and converted into N random square waves by a shift register. In order to ensure that the Ton timing is only valid during the open period of the upper tube M1, the switching signal Driver is ANDed with the output of the shift register to generate signals S51, S61, and S71 to control the switching on and off of the switch tube in the variable current source.

In the circuit of this embodiment, 3 equal current sources I2 are controlled by 3 switch tubes, 4 kinds of variable currents can be generated according to the on-off combination of switch tubes, that is, three channels off, any one channel on, any two channels on and three channels on; if the current of the one channel is I2, there are 4 kinds of variable currents: 0, 1×I2, 2×I2, 3×I2. A random square wave is generated by a random square wave generator, and then a 3-bit random square wave is generated from one random signal through a shift register, which is determined according to the number of current sources in the variable current source. In order to ensure that the Ton timing is only valid during the open period of the upper tube, the upper tube open signal is ANDed with the output of the shift register to generate S51, S61, and S71 to control the on and off of the switch tube in the variable current source.

In addition, this embodiment also provides a Ton timing method that can reduce the electromagnetic interference of the switching power supply, comprising the following steps:
Step 1: A random square wave generated by the random square wave generator is used to generate a 3-bit random square wave through a shift register, and the frequency of the random square wave is greater than the switching frequency of the power supply;
Step 2: Perform AND operation on the generated 3-bit random square waves with the switching signal Driver respectively;
Step 3: The three calculation results respectively control the on or off of the three variable current source units; the output currents of the three variable current source units are equal, and the sum of the currents of the three current sources I2 is less than the current of constant current source I1;
Step 4: All of the three variable current source units that are turned on and the constant current source I1 that is turned on under the control of the switching signal Driver jointly charge the capacitor C1;
Step 5: When the potential of the capacitor C1 reaches the comparison threshold in the comparison unit, the comparison unit generates a narrow pulse signal Ton_dis, which controls the discharging tube M4 to discharge to the capacitor C1.

Driver is the switch module control signal, that is, the power tube upper tube M1 turn-on signal, each time the upper tube M1 is turned on, the constant current source I1 and the variable current source charge the capacitor C1, and the constant current source charges the same current each time, the current of variable current source is variable and changes randomly like a random signal; when the potential on the capacitor C1 reaches the comparison threshold in the comparison unit, the comparison unit generates a narrow pulse signal Ton_dis, controls the discharging tube M4 to discharge to the capacitor C1 by Ton_dis, and performs Ton timing when the upper tube M1 is turned on in the next cycle, so the Ton of each cycle will be different and generate different frequencies; observed on the frequency spectrum, the resonant spikes at the switching frequency can be eliminated, thereby reducing the EMI generated by switching.

### Embodiment 3

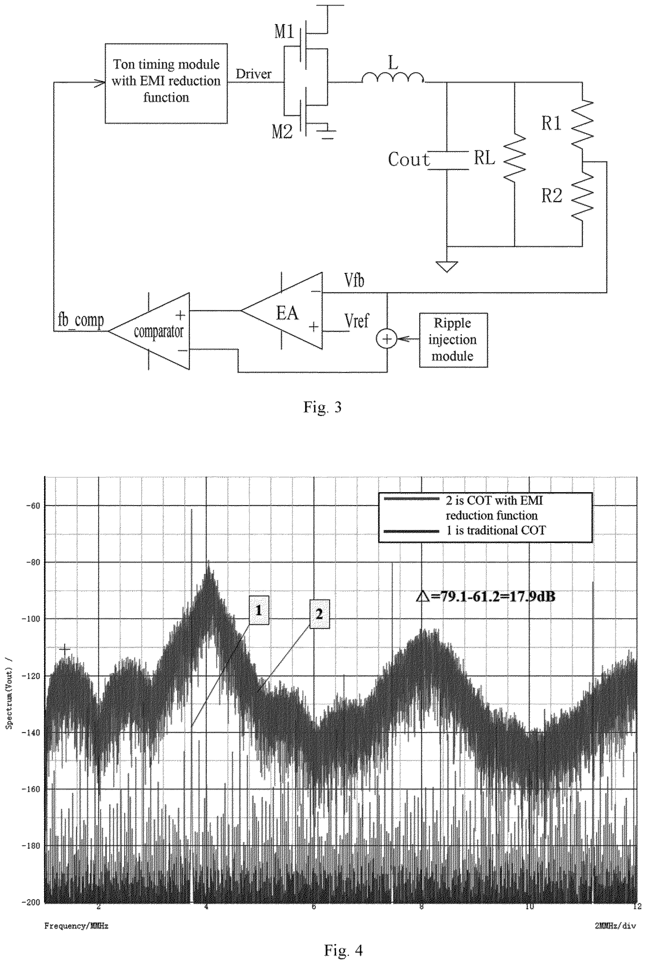

As shown in Figure 3, this embodiment offers a low electromagnetic interference switching power supply based on COT control, comprising a switch module, an LC module, a sampling module, a feedback module, and a Ton timing module connected in sequence; the Ton timing module adopts the Ton timing circuit capable of reducing the electromagnetic interference of the switching power supply according to Embodiment 1 or 2; the feedback module is used to generate the turn-on edge of the switching signal Driver: fb_comp; the Ton timing module is used to generate the closing edge of the switching signal Driver: Ton_dis; the feedback module and Ton timing module work together to generate a switching signal Driver.

Figure 4 is a schematic diagram of the output voltage EMI comparison between COT with EMI reduction function of the present invention and traditional COT (Vout=1.8V, Iout=1.2A), the abscissa represents the EMI frequency, the ordinate represents the amplitude of Vout, the waveform 1 represents output voltage EMI of traditional COT, and the value of the highest point is -61.2dB; waveform 2 represents the output voltage EMI of the COT with the EMI reduction function of the present invention, and the value of the highest point is -79.1dB; it can be seen from the figure that compared with the traditional COT output voltage, the EMI of the present invention is reduced by 18dB, which can effectively reduce the EMI.

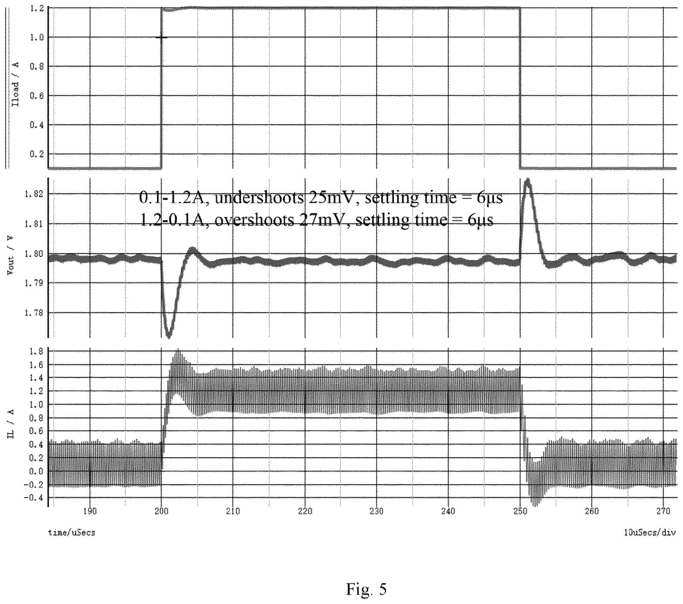

Figure 5 is a schematic diagram of the load switching waveform diagram of COT control with EMI reduction function of the present invention, the abscissa represents time, IL and ILoad represent inductor current and load current, and Vout represents output voltage; when load current is switched from 0.1A to 1.2A, the output voltage undershoots by 25mV, and the switching time to steady state is 6us; when the load current is switched from 1.2A to 0.1A, the output voltage overshoots by 27mV, and the switching time to steady state is 6us.

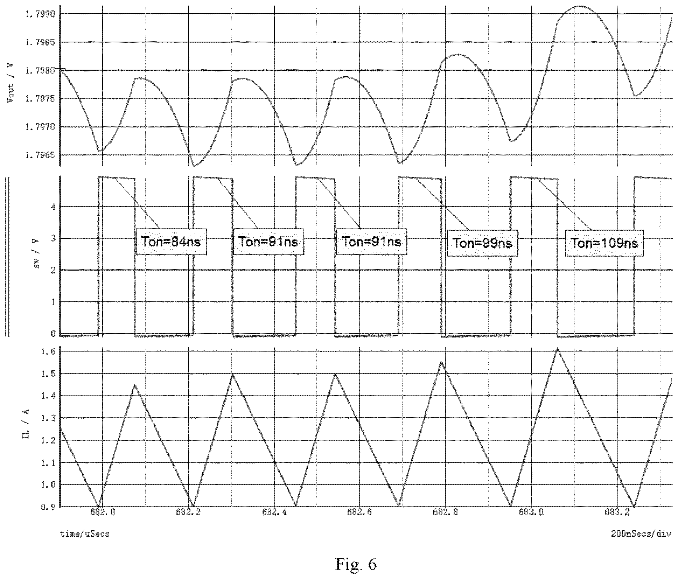

Figure 6 is a schematic diagram of the timing effect of the Ton timing circuit with EMI reduction function of the present invention, the abscissa represents time, IL represents the inductor current, Vout represents the output voltage; SW represents the output voltage of the power tube (M1/M2); it can be seen from the figure that the Ton in the SW waveform diagram is 84ns, 91ns, 91ns, 99ns and 109ns respectively, so that the randomness of Ton in each cycle is realized, and IL and Vout change together with SW.

## Claims

1. A Ton timing circuit that can reduce the electromagnetic interference of the switching power supply,
Comprising of a constant current source I1, a charging tube M3, a discharging tube M4, a capacitor C1 and a comparison unit;
Said charging tube M3 includes a source connected to the output terminal of the constant current source I1, a drain connected to one end of the capacitor C 1, and a gate connected to the switching signal Driver;
Said comparison unit includes an input terminal connected to one end of the capacitor C1; the other end of said capacitor C1 is grounded;
Said discharging tube M4 includes a drain connected to one end of the capacitor C1, a source grounded, and a gate connected to the output terminal of the comparison unit;
**Characterized in that**:
It also comprises a variable current source module and a random signal generation module;
Said variable current source module comprises N channels of variable current source units, where N is an integer greater than 1;
Said variable current source unit comprises a switch tube and a current source I2, and the sum of the currents of the N current sources I2 is less than the current of the constant current source I1;
Said current source I2 includes an output terminal connected to the source of the switch tube, and the drain of said switch tube is connected to one end of the capacitor C1;
Said random signal generation module comprises a random square wave generator, a shift register with N output terminals, and N AND gates, the output terminal of said random square wave generator is connected to the input terminal of the shift register, N output terminals of the shift register are connected to one input terminal of N AND gates; the other input terminal of N AND gates is connected to the switching signal Driver respectively, and the output terminals of N AND gates are respectively connected to the gates of N switch tubes in a one-to-one correspondence, used to control the respective conduction of N switch tubes.

2. Said Ton timing circuit capable of reducing the electromagnetic interference of the switching power supply according to claim 1, **characterized in that**, the sum of the currents of the N current sources I2 is 10%-20% of the constant current source I1.

3. Said Ton timing circuit capable of reducing the electromagnetic interference of the switching power supply according to claim 1, **characterized in that**, said charging tube M3 is a PMOS type switch tube, and said discharging tube M4 is an NMOS type switch tube.

4. A Ton timing method capable of reducing electromagnetic interference of switching power supplies, **characterized in that** it comprises the following steps:
Step 1: One random square wave generated by the random square wave generator is used to generate N random square waves through the shift register, and the frequency of the random square wave is greater than the switching frequency of the power supply, and N is an integer greater than 1;
Step 2: Perform AND operation on the generated N random square waves with the switching signal Driver respectively;
Step 3: The N calculation results respectively control the turn-on or turn-off of the N channels of variable current source units; said N channels of variable current source units have equal output current, and the sum of the currents of the N current sources I2 is less than the current of constant current source I1;
Step 4: All of the N channels of variable current source units that are turned on and the constant current source I1 that is turned on under the control of the switching signal Driver jointly charge the capacitor C1;
Step 5: When the potential of the capacitor C1 reaches the comparison threshold in the comparison unit, the comparison unit generates a narrow pulse signal Ton_dis, which controls the discharging tube M4 to discharge to the capacitor C1.

5. A Ton timing circuit capable of reducing the electromagnetic interference of the switching power supply,
Comprising a constant current source I1, a charging tube M3, a discharging tube M4, a capacitor C1 and a comparison unit;
Said charging tube M3 includes a source connected to the output terminal of the constant current source I1, a drain connected to one end of the capacitor C 1, and a gate connected to the switching signal Driver;
Said comparison unit includes an input terminal connected to one end of the capacitor C1; the other end of said capacitor C1 is grounded;
Said discharging tube M4 includes a drain connected to one end of the capacitor C1, a source grounded, and a gate connected to the output terminal of the comparison unit;
**Characterized in that**:
It also comprises a variable current source module and a random signal generation module;
Said variable current source module includes a variable current source unit;
Said variable current source unit comprises a switch tube and a current source I2; the sum of the currents of said current sources I2 is less than the current of the constant current source I1;
Said current source I2 includes an output terminal connected to the source of the switch tube, and the drain of said switch tube is connected to one end of the capacitor C1;
Said random signal generation module comprises a random square wave generator, and AND gate, said random square wave generator is connected to an input terminal of the AND gate; the other input terminal of AND gate is connected to the switching signal Driver, and the output terminal of AND gate is connected to the gate of the switch tube, used to control the conduction of switch tube.

6. The Ton timing circuit capable of reducing electromagnetic interference of a switching power supply according to claim 5, **characterized in that** the current of said current source I2 is 10%-20% of the constant current source I1.

7. The Ton timing circuit capable of reducing the electromagnetic interference of the switching power supply according to claim 5, **characterized in that** said charging tube M3 is a PMOS type switch tube and said discharging tube M4 is an NMOS type switch tube.

8. A Ton timing method capable of reducing electromagnetic interference of switching power supplies, **characterized in that** it comprises the following steps:
Step 1: The random square wave generator generates a random square wave;
Step 2: Perform AND operation on the generated square wave and the switching signal Driver;
Step 3: The operation result controls the turn-on or turn-off of the variable current source module; the current of said current source I2 is less than the current of the constant current source I1;
Step 4: When the variable current source module is turned off, the constant current source I1 charges the capacitor C1; when the variable current source module is turned on, the variable current source module and the constant current source I1 jointly charge the capacitor C1;
Step 5: When the potential of the capacitor C1 reaches the comparison threshold in the comparison unit, the comparison unit generates a narrow pulse signal Ton_dis, which controls the discharging tube M4 to discharge to the capacitor C1.

9. A low electromagnetic interference switching power supply based on COT control, comprising a switch module, an LC module, a sampling module, a feedback module and a Ton timing module connected in sequence;
**Characterized in that**:
Said Ton timing module adopts the Ton timing circuit capable of reducing the electromagnetic interference of the switching power supply according to any one of claims 1 to 3, or said Ton timing module adopts the Ton timing circuit capable of reducing the electromagnetic interference of the switching power supply according to any one of claims 5 to 7;
Said feedback module is used to generate the turn-on edge of the switching signal Driver: fb_comp;
Said Ton timing module is used to generate the closing edge of the switching signal Driver: Ton_dis;
Said feedback module and Ton timing module work together to generate a Driver signal.
